# EUROPEAN PATENT APPLICATION

(11) **EP 2 251 720 A2**
(43) Date of publication of application: **17.11.2010**
(21) Application number: 10154290.0
(22) Date of filing: 22.02.2010
(51) Int. Cl.: G02B 6/00

(54) **Light-emitting unit and backlight apparatus having the same**

(30) Priority: 11.05.2009 KR 20090040763
(71) Applicant: SAMSUNG ELECTRONICS CO., LTD., Suwon-si Gyeonggi-do 442-742 (KR)
(72) Inventor: Choi, Suk-ju, Jeollabuk-do (KR); Lee, Kye-hoon, Gyeonggi-do (KR); Kim, Kyoung-ae, Suwon-si Gyeonggi-do (KR)
(74) Representative: Davies, Robert Ean

(57) **Abstract**

A light source unit is provided that includes a plurality of transparent substrates on which a plurality of light sources are mounted and which are arranged in a plurality of rows. A plurality of light guide plates (LGPs) are interposed between the plurality of transparent substrates, wherein the light source emits light so that the light penetrates the LGP and faces the transparent substrate at a next row.

## Description

### CROSS-REFERENCE TO RELATED APPLICATIONS

This application claims priority from Korean Patent Application No. 10-2009-0040763, filed on May 11, 2009 in the Korean Intellectual Property Office, the disclosure of which is incorporated herein by reference in its entirety.

### BACKGROUND

### 1. Field of the Invention

Apparatuses and methods consistent with the inventive concept relate to a backlight apparatus, and more particularly, to a backlight unit which is used for a flat panel display using a thin film transistor-liquid crystal display (TFT-LCD) panel such as a monitor and a television.

### 2. Description of the Related Art

Since display elements such as TFT-LCDs are not light-emitting elements, a backlight for emitting light is needed. A cold cathode fluorescent lamp (CCFL) has been used as a backlight, but recently the use of a light-emitting diode (LED) has been increasing due to its advantages of weight, thickness, power consumption, color gamut, switching time, and life span.

In particular, since a backlight using an LED does not use mercury and can realize clear image quality and wide color reproduction, the use of the LED as the next generation liquid crystal displaying apparatus is increasing. If the LED is used as a light source of the backlight, local dimming, which indicates adjusting the brightness of the LED block by block according to image information, can be performed. Accordingly, power consumption can be sharply reduced compared with an existing backlight apparatus and contrast ratio of an image can be improved.

A backlight using an LED is divided into edge lighting and direct lighting according to the position of the backlight. In edge lighting, LEDs are arranged along an edge of a light guide plate (LGP) and emit light to center, generating a pattern to diffuse the light on the LGP. Thus, light emitted from the LEDs is diffused on the LGP so as to form surface light. Accordingly, edge lighting can be used in a slim display panel. However, comparatively expensive LEDs having high luminance have to be used, and the amount of light lost by diffusion results in a darker screen as compared with direct lighting.

In direct lighting, light is emitted from the back of a display panel, so a brighter screen can be given due to the abundant amount of light. However, since LEDs are disposed on the back of the display panel, the display panel is thick.

Therefore, there is a need to eliminate the disadvantages of edge lighting and direct lighting.

### SUMMARY

Exemplary embodiments address at least the above problems and/or disadvantages and other disadvantages not described above. Also, exemplary embodiments are not required to overcome the disadvantages described above, and an exemplary embodiment may not overcome any of the problems described above.

One or more exemplary embodiments provide a backlight apparatus to provide a slim display device and bright light, and a light source unit used for the backlight apparatus so as to solve the disadvantages of edge lighting and direct lighting.

According to an exemplary embodiment, there is provided a light source unit, including a plurality of transparent substrates in which a plurality of light sources are mounted and which are arranged in a plurality of rows, and a plurality of light guide plates (LGPs) which are interposed between the plurality of transparent substrates, wherein the light sources emit light so that the light penetrates the LGPs and faces the transparent substrate at a next row.

The plurality of light sources may be formed on a first surface of the transparent substrate so that the light is emitted in a single direction. The plurality of light sources may be formed on both surfaces of the transparent substrate so that the light is emitted in two directions. The light sources may be alternately disposed with respect to the light sources on a second surface, facing the first surface, of the transparent substrate at a next row.

The transparent substrate may be connected to the plurality of light sources using a transparent wire.

The light source unit may further include a control unit which controls the brightness by selecting the plurality of light sources by a predetermined number of units, a module, or a predetermined area.

The light source may be spaced a predetermined distance apart from the LGP, and may preferably be spaced approximately 0.5mm-1.5mm apart from the LGP.

The LGP may include a pattern to diffuse the light emitted from the light sources.

The light source may be an LED.

According to another exemplary embodiment, there is provided a backlight apparatus, including a reflection sheet, a light source unit, which is disposed on the reflection sheet, a polarizing unit which filters light from the light source unit using a predetermined wavelength, and a block unit which filters a predetermined frequency band and passes light of a predetermined wavelength. The block unit may include a band elimination filter (BEF) which is disposed on the polarizing unit, and a dual brightness enhancement film (DBEF) which is disposed on the BEF.

As can be appreciated from the above description, a backlight apparatus having a slimmer design as compared with direct lighting, and a brighter screen as compared with edge lighting can be provided.

### BRIEF DESCRIPTION OF THE DRAWINGS

The above and/or other aspects of the present invention will be more apparent by describing certain exemplary embodiments with reference to the accompanying drawings, in which:

FIG. 1 is an exploded perspective view of a principal part of a backlight apparatus according to a first exemplary embodiment;

FIG. 2 is a front view of the backlight apparatus of FIG. 1;

FIG. 3 is an exploded perspective view of a principal part of a backlight apparatus according to a second exemplary embodiment;

FIG. 4 is a front view of the backlight apparatus of FIG. 3;

FIG. 5 schematically illustrates the principal part of the backlight apparatus of FIG. 3;

FIG. 6 is a perspective view of FIG. 5;

FIG. 7 schematically illustrates a light path of the backlight apparatus of FIG. 4; and

FIG. 8 schematically illustrates a light path of the backlight apparatus including light sources disposed alternately according to an exemplary embodiment.

### DETAILED DESCRIPTION OF EXEMPLARY EMBODIMENTS

Certain exemplary embodiments will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the exemplary embodiments can be practiced without those specifically defined matters. Also, well-known functions or constructions are not described in detail since they would obscure the invention with unnecessary detail.

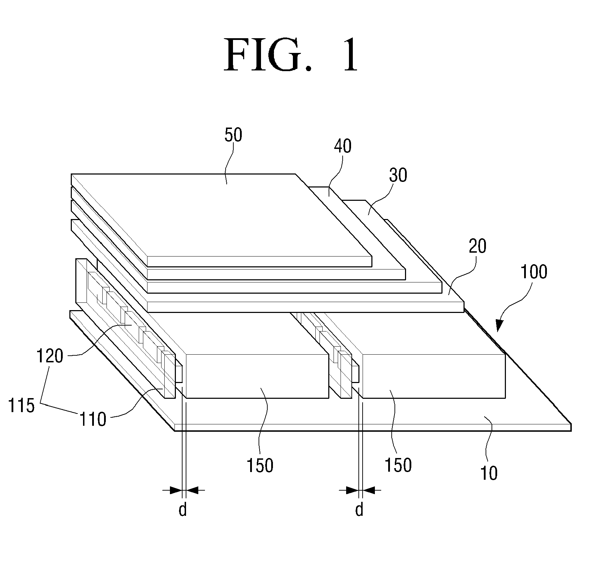

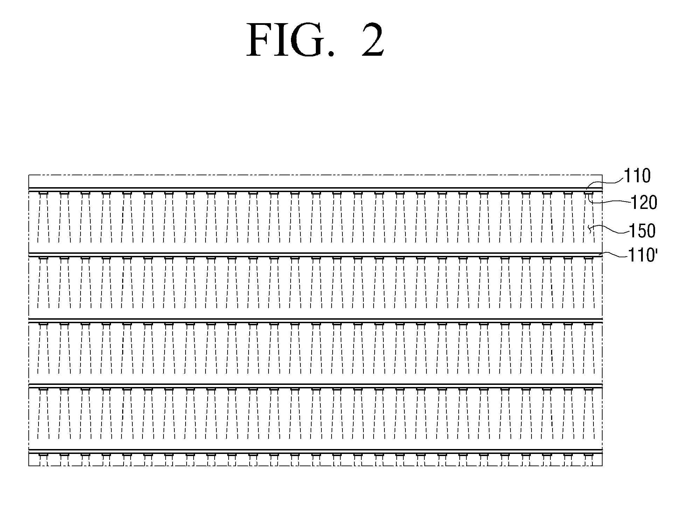

Figures 1 and 2 illustrate a backlight apparatus according to a first exemplary embodiment. The backlight apparatus according to the first exemplary embodiment of the present invention may include a reflection sheet 10, a light source unit 100, a polarizing plate 20, a polarizing sheet 30, a band elimination filter (BEF) 40, and a dual brightness enhancement film (DBEF) 50.

The reflection sheet 10 reflects light of the light source unit 100 toward an imaging unit (not shown), and minimizes loss of the light of the light source unit.

The light source unit 100 includes a plurality of sub light source units 115, each including a transparent substrate 110 on which a plurality of light sources 120 are installed, and a plurality of light guide plates (LGPs) 150 which diffuse point light emitted from the light sources 120 into surface light. Detailed structure and operation will be described below.

The polarizing plate 20, the polarizing sheet 30, the BEF 40, and the DBEF 50 transmit only light of a specific wavelength, so the light emitted from the light source unit 100 can be uniformly transmitted to the imaging unit. The polarizing plate 20, the polarizing sheet 30, the BEF 40, and the DBEF 50 diffuse point light of the light sources 120 into surface light. Detailed function thereof is not related to the main feature of the present invention, so detailed description is omitted here.

Referring to Fig. 2, the transparent substrate 110 is a printed circuit board (PCB) formed of a permeable material, and the plurality of light sources 120 are formed on the transparent substrate 110. Each light source 120 is a light-emitting diode (LED), and receives power supplied by a transparent wire (not shown). The light sources 120 emit light in a single (same) direction facing the transparent substrate 110 at another row. The emitted light penetrates the adjacent LGP 150 and reaches a next transparent substrate 110'.

The LGP 150 is formed of a transparent resin, and is spaced a distance (d) approximately 0.5 mm - 1.5 mm apart from each light source 120. As illustrated in FIG. 2, each LGP 150 is interposed between the transparent substrates 110 and is formed in a predetermined pattern so that the light emitted from the light sources 120 can be diffused and all of the LGPs 150 can form surface light. In this manner, the LGP 150 diffuses and disperses the light of the light sources 120 so that light having a uniform brightness can be transferred to the imaging unit (not shown).

Since the transparent substrates 110 on which the light sources 120 are installed are formed of a permeable material and each light source 120 receives power supply through a transparent wire, the light which is emitted from the light sources 120 and penetrates the LGP 150 can penetrate the transparent substrates 110. Therefore, the transparent substrates 110 can prevent darkness and stripes which may be caused when a substrate on which the light sources 120 are installed is formed of an opaque material.

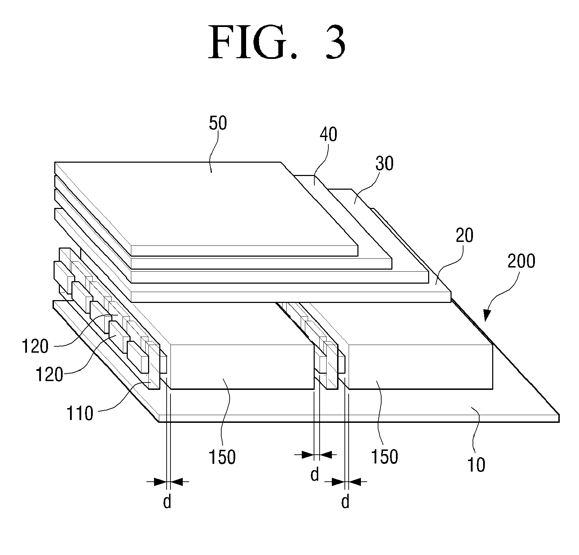

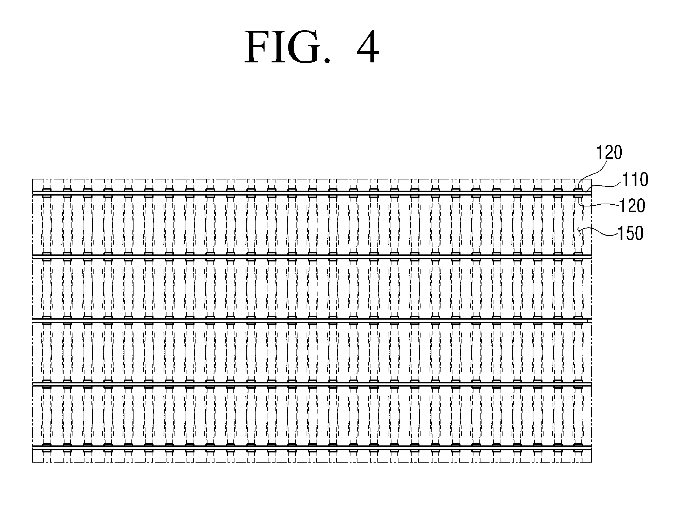

FIGS. 3 and 4 illustrate a backlight apparatus according to a second exemplary embodiment. The backlight apparatus according to the second exemplary embodiment of the present invention may include a reflection sheet 10, a polarizing plate 20, a polarizing sheet 30, a BEF 40, a DBEF 50, which are the same as those in the first exemplary embodiment, and a light source unit 200, which is different from the light source 100 of the first exemplary embodiment. In the light source unit 200, a plurality of light sources 120 are formed on both surfaces of a transparent substrate 110, and an LGP 150 is spaced a distance (d) apart from each light source 120. As illustrated in FIG. 4, the light sources 120 emit light in both directions on the basis of the transparent substrate 110.

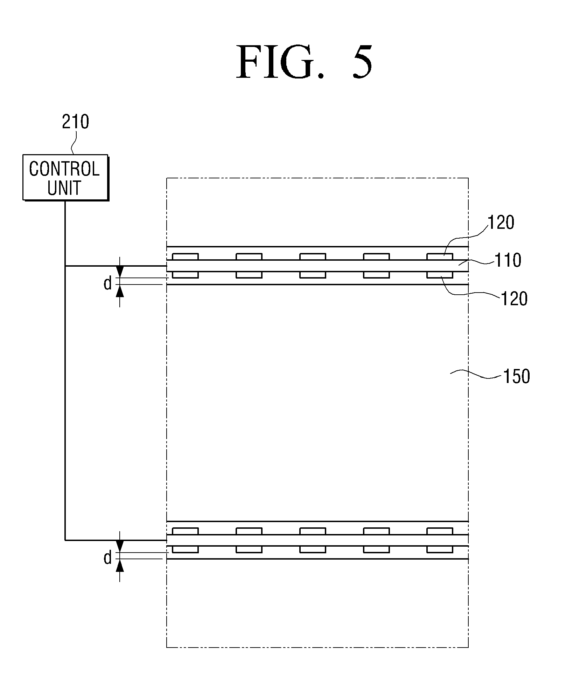

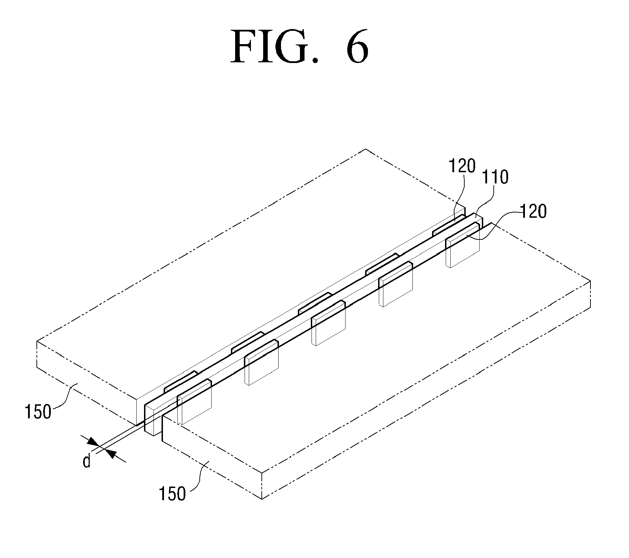

FIGS. 5 and 6 illustrate a plane view and a perspective view of the light source unit 200 according to the second exemplary embodiment, respectively. Similar to the light sources 120 in the first exemplary embodiment, each of the light sources 120 is an LED receiving power receiving power supplied by a transparent wire and may be spaced a predetermined distance (d) apart from the LGP 150. The predetermined distance (d) may be approximately between 0.5 mm and 1.5 mm. If the light sources 120 are spaced apart from the LGP 150, deformation of the LGP 150 due to heat generated by the light sources 120 can be prevented.

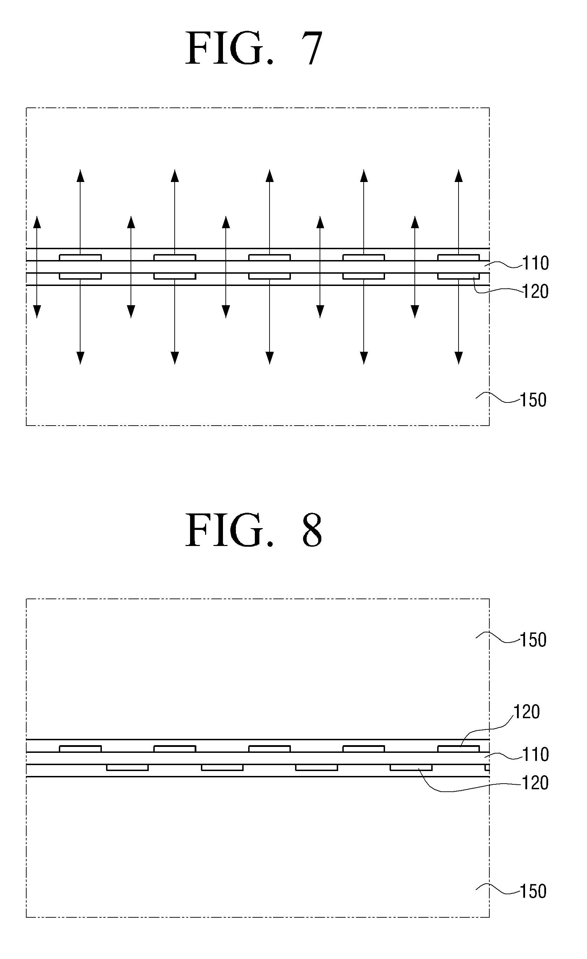

As illustrated in FIG. 7, if the light sources 120 formed on a first surface of the transparent substrate 110 in a first row emit light toward the light sources 120 formed on a second surface, facing the first surface, of the transparent substrate 110 in a second row, the amount of light penetrating the LGP 150 is double compared with the first exemplary embodiment in which the light sources 120 are formed on only a single surface of the transparent substrates 110, so bright screen can be obtained.

The light sources 120 may be alternately disposed on the transparent substrate 110 as illustrated in FIG. 8. If the light sources 120 are disposed in this manner, each light source 120 emits light toward a transparent portion of a next transparent substrate 110' (see FIG. 4), so the LGP 150 can maintain uniform brightness.

The light source units 100 and 200 according to the exemplary embodiments of the present invention may include a control unit 210 to control the light sources 120 to be turned on or off by a predetermined number of units as illustrated in FIG. 5. For example, if the light sources 120 formed on the transparent substrate 110 are wired so as to control the light sources 120 by 10 units or 20 units, local dimming to selectively turn off backlight can be performed when reproducing black or dark color.

The foregoing exemplary embodiments are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A light source unit comprising:
a plurality of transparent substrates which are arranged in a plurality of rows;
a plurality of light sources which are disposed on the plurality transparent substrates; and
a plurality of light guide plates which are interposed between the plurality of transparent substrates on which the plurality of light sources are disposed,
wherein each of the plurality of light sources emits light that passes through at least an adjacent one of the light guide plates.

2. The light source unit according to claim 1, wherein the plurality of light sources are disposed on a first surface of each of the plurality of the transparent substrates and emit the light in a same direction.

3. The light source unit according to claim 1, wherein the plurality of light sources are disposed on opposing first and second surfaces of each of the plurality of the transparent substrate so that the light is emitted in two opposite directions.

4. The light source unit according to claim 3, wherein the light sources disposed on the first surface of each of the transparent substrates are alternately disposed with respect to the light sources on the second surface of each of the transparent substrates.

5. The light source unit according to claim 1, wherein each of the plurality of light sources is connected to a transparent wire through which power is supplied.

6. The light source unit according to claim 1, further comprising:
a control unit which controls brightness by selecting the plurality of light sources by a predetermined number of units, a module, or a predetermined area.

7. The light source unit according to claim 1, wherein each of the plurality of light sources is spaced a predetermined distance apart from an adjacent one of the plurality of light guide plates.

8. The light source unit according to claim 7, wherein each of the plurality of light sources is spaced approximately 0.5 mm - 1.5 mm apart from the adjacent one of the plurality of light guide plates.

9. The light source unit according to claim 7, wherein the light guide plates include a pattern that diffuses the light emitted from the plurality of light sources.

10. The light source unit according to claim 7, wherein the plurality of light sources are a light-emitting diode.

11. The light source unit according to claim 3, wherein the first surface of each transparent substrate faces the second surface of an adjacent transparent substrate so that the light emitted from the light sources on the first surface of each transparent substrate and the light emitted from the light sources on the second surface of the adjacent transparent substrate are emitted in opposite directions.

12. A backlight apparatus comprising:
a reflection sheet;
a light source unit which is disposed on the reflection sheet and emits light;
a polarizing unit which transmits light from the light source unit of a predetermined wavelength; and
a block unit which filters a predetermined frequency band and passes light of said predetermined wavelength;
wherein said light source unit comprises:
a plurality of transparent substrates which are arranged in a plurality of rows;
a plurality of light sources which are disposed on the plurality transparent substrates; and
a plurality of light guide plates which are interposed between the plurality of transparent substrates on which the plurality of light sources are disposed,
wherein each of the plurality of light sources emits light that passes through at least an adjacent one of the light guide plates..

13. The backlight apparatus according to claim 11, wherein the block unit comprises:
a band elimination filter (BEF) which is disposed on the polarizing unit; and
a dual brightness enhancement film (DBEF) which is disposed on BEF.
